# EUROPÄISCHE PATENTSCHRIFT

(11) **EP 2 385 906 B1**
(45) Veröffentlichungstag und Bekanntmachung des Hinweises auf die Patenterteilung: **28.09.2016**
(21) Anmeldenummer: 09798884.4
(22) Anmeldetag: 16.12.2009
(51) Int. Cl.: F16F 3/02, B60G 11/48, B60G 15/06, B60G 17/02, F16F 1/02, F16F 1/32, F16F 9/38

(54) **FEDERBEIN FÜR RADAUFHÄNGUNGEN VON KRAFTFAHRZEUGEN MIT EINEM ALS ZUSATZFEDER AUSGEBILDETEN METALLISCHEN FALTENBALG**
SUSPENSION STRUT FOR VEHICLES HAVING METAL BELLOWS AS A SUPPORT SPRING
JAMBE DE SUSPENSION POUR VEHICULES COMPORTANT UNE SOUFFLET MÉTALLIQUE COMME RESSORT DE MAINTIENT

(30) Priorität: 09.01.2009 DE 102009004156
(43) Veröffentlichungstag der Anmeldung: 16.11.2011
(73) Patentinhaber: Audi AG, 85045 Ingolstadt (DE)
(72) Erfinder: MICHEL, Wilfried, 93339 Riedenburg (DE); OHLETZ, Armin, 85092 Kösching (DE)
(74) Vertreter: Asch, Konrad
(86) Internationale Anmeldenummer: PCT/EP2009/009005
(87) Internationale Veröffentlichungsnummer: WO 2010/078923

(56) Entgegenhaltungen:
- EP-A2- 1 681 184
- DE-A1- 3 151 771
- DE-A1-102005 053 493
- DE-A1-102007 027 514
- DE-U- 1 900 892
- US-A- 2 162 719
- US-A- 2 981 534

## Beschreibung

Die Erfindung betrifft ein Federbein für Radaufhängungen von Kraftfahrzeugen gemäß dem Oberbegriff des Patentanspruches 1.

Ein derartiges Federbein für eine aktive Radaufhängung für Kraftfahrzeuge beschreibt beispielsweise die DE 10 2005 053 493 A1, bei der zur Wank- und Nickstabilisierung und/oder zur Höhenverstellung der Karosserie des Kraftfahrzeuges innerhalb der Tragfeder und/oder Speicherfeder und um den Stoßdämpfer herum ein elektromotorisch betriebener Stelltrieb vorgesehen ist, der auf einen axial verschiebbaren Verstellfederteller wirkt.

Der Fahrzeugaufbau wird daher über eine Reihenschaltung von Trag- und Speicherfeder getragen. Parallel zur Speicherfeder ist der Stelltrieb angeordnet, bestehend aus Motor und Getriebe. Durch Drehung eines durch den Motor angetriebenen Kugelgewindetriebes wird eine Federfußpunktverstellung an der Tragfeder erreicht und somit eine Kraftstellung auf das Rad erreicht. Die Stelleingriffe erfolgen im niederfrequenten Bereich bis ca. 6 Hz. Ziel ist die vollständige Beeinflussung des Aufbauverhaltens in diesem Frequenzbereich. Zur Bedämpfung der höherfrequenten Schwingungen ist der Anordnung ein Stoßdämpfer parallel geschaltet.

Zum Schutz zumindest des Stelltriebes hinsichtlich Steinschlag, Korrosion, Nässe ist ein Faltenbalg vorzusehen, der mit den abstützenden Federtellern der als Schraubendruckfedern ausgeführten Federn verbunden ist. Die Konstruktion ist dabei so auszuführen, dass auf den Faltenbalg aus gummielastischem Material kein durch die Federbewegungen der Tragfeder und/oder der Speicherfeder bewirktes Verdrillen auftritt, das die Lebensdauer des Faltenbalges beeinträchtigt.

Aufgrund der räumlich sehr begrenzten Möglichkeiten kann die Tragfeder meist nicht mit der eigentlich erforderlichen Federkonstante ausgeführt werden. Die für die Feder notwendigen geometrischen Abmessungen sind somit nicht umzusetzen. Das heißt, die erwünschten Stellkräfte werden nicht erreicht, so dass ein Kompromiss erforderlich ist.

Aufgabe der Erfindung ist es, ein Federbein der gattungsgemäßen Art mit baulich einfachen Mitteln derart weiterzubilden, dass eine verbesserte Funktion des Federbeines ohne Verdrillung des Faltenbalges erzielt ist.

Diese Aufgabe wird erfindungsgemäß mit den Merkmalen des Patentanspruches 1 gelöst. Vorteilhafte Weiterbildungen der Erfindung sind den weiteren Patentansprüchen entnehmbar.

Gemäß dem kennzeichnenden Teil des Patentanspruches 1 ist der Faltenbalg als ein die Tragfeder unterstützendes Zusatzfederelement ausgebildet. Ein solcher Faltenbalg ist aus dem EP 1 681 184 A2 bekannt.

Durch eine derartige konstruktive Veränderung von dem der Tragfeder zugeordneten unteren Faltenbalg wirkt dieser zusätzlich als eine der Tragfeder (Schraubenfeder aus Stahl) parallel zugeschalteten Feder. Damit addieren sich die die Federkonstanten von Tragfeder und Tragfederfaltenbalg. Der Zielkonflikt aus Bauraum und funktionalen Anforderungen kann dadurch teilweise aufgehoben, zumindest aber ein deutlich besserer Kompromiss erzielt werden. Bei der funktionalen/konstruktiven Gestaltung der erfindungsgemäßen Faltenbalgfeder kann im teilbeladenen Fahrzeugzustand (dass heißt Parkplatzlage, Federbein unter Last entsprechend statischem Fahrzeuggewicht) der Faltenbalg keine Tragwirkung übernehmen, dass heißt er ist kraftfrei.

Der Faltenbalg ist weiter gemäß dem kennzeichnenden Teil des Patentanspruches 1 als torsionssteifer Metallbalg ausgebildet sein. Der Faltenbalg kann somit in vorteilhafter Weise die von den Federn ausgeübten Torsionsmomente abstützen. Durch diese Funktion kann zum Beispiel eine innerhalb des Stellelementes vorgesehene Verdrehsicherung am Verstellfederteller entfallen, die gegebenenfalls die Ansprechempfindlichkeit bzw. die Leichtgängigkeit des Stelltriebes nachteilig beeinflussen könnte.

Solche Torsionsmomente können sich ergeben, wenn beim axialen Verstellen des Verstellfedertellers, sowie auch bei den vom Rad vorgegebenen natürlichen Ein- und Ausfederbewegungen die Federn versuchen, den Verstellfederteller um seine Achse zu drehen. Sowohl Speicherfederfaltenbalg als auch Tragfederfaltenbalg sind an ihrem Ende jeweils ortsfest verbunden. Die Folge ist, dass beide Faltenbälge verdrillt werden können. Bestehen diese aus einem Polymer, werden sie zerstört werden. Nach obigem Vorschlag, den Faltenbalg aus Metall auszuführen, wäre eine Zerstörung ausgeschlossen. Der Metallbalg würde in diesem Fall den Verstellfederteller am Verdrillen hindern und abstützen. Der Speicherfederfaltenbalg, welcher ja nach wie vor aus Polymer besteht, würde vor Zerstörung geschützt werden.

In besonders vorteilhafter Weiterbildung der Erfindung kann der als Zusatzfeder eingesetzte Metallbalg ähnlich gestapelter Tellerfedern mäanderförmig oder wellenförmig gestaltet sein. Insbesondere ist der Metallbalg parallel zur Tragfeder geschaltet und verstärkt deren Federkonstante in gezielter Weise mit.

Des Weiteren kann der Faltenbalg konstruktiv so ausgelegt und gestaltet sein, dass er im mittleren Belastungsbereich (um die Konstruktionslage) eine lineare Kennlinie und darüber hinaus eine progressive Kennlinie aufweist. Daraus resultiert eine bevorzugte Kraft-Weg-Kennlinie des Federbeines, die im Fahrbetrieb eine komfortable und in Grenzbereichen ins sportliche übergehende Federeigenschaft bereitstellt. Die Steifigkeitskennlinie des Faltenbalgs kann daher in diesem Fall so ausgelegt sein, dass bis zur Mitte des maximalen, einseitigen Stellwegs (axialer Verstellweg des Federtellers) aus der Nulllage heraus eine möglichst konstante Steifigkeit (linearer Kraftanstieg) vorliegt, anschließend eine progressive Kennlinie vorhanden ist.

Der Kraftverlauf des Faltenbalges kann dabei durch ungleiche Wandstärken und/oder durch geometrische Ausbildung der Lamellen des Faltenbalges und/- oder durch ungleiche Abstände zwischen den Lamellen und/oder durch die Wahl des verwendeten Werkstoffes gezielt bestimmt sein. Damit gelingt es in baulich und konstruktiv einfacher Weise, je nach Fahrzeugtyp oder gewünschten Federungseigenschaften unterschiedliche Faltenbälge auszulegen und zu verbauen.

Ferner kann der Faltenbalg konstruktiv so ausgelegt sein, dass er in der Konstruktionslage der Radaufhängung kraftfrei ist und dann über eine lineare Kraft-Weg-Kennlinie in eine progressive Kennlinie übergeht. Neben einer in der Kombination mit der eigentlichen Tragfeder günstigen Gesamtfederkonstante ist auch die Montage des Faltenbalges am Federbein vereinfacht.

Schließlich wird vorgeschlagen, dass um die Speicherfeder herum ein zweiter Faltenbalg vorgesehen ist, der an deren Federteller befestigt ist und der als herkömmlicher, gummielastischer Faltenbalg ausgebildet ist. Da die auftretenden Torsionsmomente bei Federbewegungen des Federbeines durch den Metallbalg an der Tragfeder abgestützt sind, kann in vorteilhafter Weise an der Speicherfeder kein deren Lebensdauer beeinträchtigendes Verdrillen mehr auftreten.

Ein Ausführungsbeispiel der Erfindung ist im Folgenden mit weiteren Einzelheiten näher erläutert. Die schematische Zeichnung zeigt in:
- Fig. 1: einen Längsschnitt durch ein aktives Federbein für eine Radaufhängung von Kraftfahrzeugen, mit einem Teleskop-Stoßdämpfer, einer Tragfeder, einer Speicherfeder, einem elektromotorisch betriebenen Stelltrieb zur Höhenverstellung der Karosserie des Kraftfahrzeuges, sowie mit die Federn und den Stelltrieb umschließenden Faltenbälgen, von denen der die Tragfeder umschließende Faltenbalg als Metallbalg ausgeführt ist;
- Fig. 2: ein Ersatzschaltbild des Federbeines nach Fig. 1;
- Fig. 3: eine Kraft-Weg-Kennlinie des als Zusatzfeder wirkenden Metallbalges;
- Fig. 4: eine Einzelheit Z des Metallbalges gemäß Fig. 1, mit harmonikaartig gefalteten Metalllamellen; und
- Fig. 5: die Einzelheit Z gemäß Fig. 1 des Metallbalges mit wellenförmigen Metalllamellen.

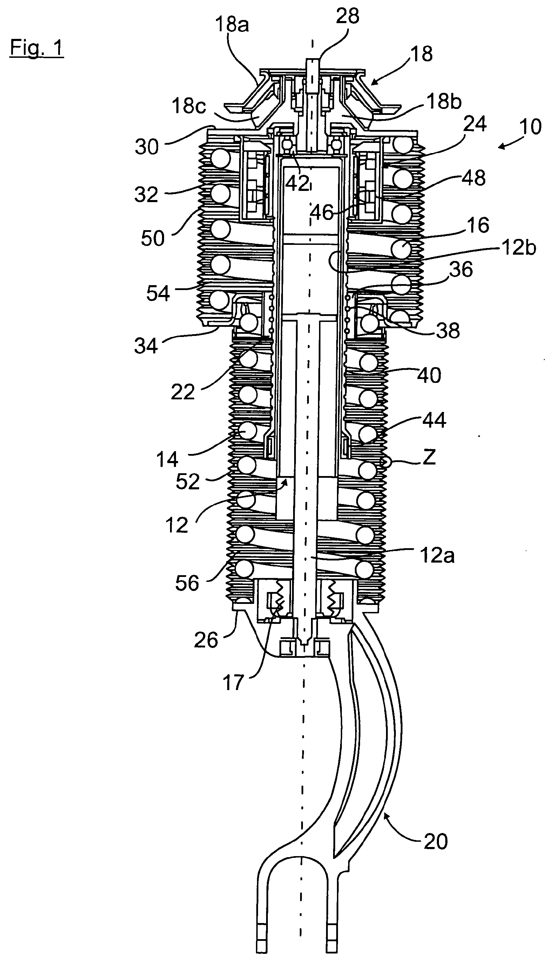

In der Fig. 1 ist schematisch ein aktives Federbein 10 für eine Radaufhängung von Kraftfahrzeugen dargestellt, das sich im Wesentlichen aus einem Teleskop-Stoßdämpfer 12, einer Tragfeder 14, einer Speicherfeder 16, einem oberen Dämpferlager 18 und einer unteren Dämpferstütze 20 zusammensetzt.

Eine Höhenverstellung der Karosserie des Kraftfahrzeuges und/oder eine Wank- und Nickstabilisierung wird gesteuert mittels eines Stelltriebes 22, der über einen Elektromotor 24 angetrieben ist.

Der Stoßdämpfer 12 ist mit seiner nach unten ragenden Kolbenstange 12a an einem unteren Federteller 26 befestigt. Der Federteller 26 bildet eine Baueinheit mit der Dämpferstütze 20, die in bekannter Weise an einem Radführungselement der Radaufhängung des Kraftfahrzeuges, zum Beispiel einem Lenker oder einem Radträger, angelenkt oder befestigt ist. An dem Federteller 26 ist ferner ein gummielastischer Anschlagpuffer 17 vorgesehen.

Das Dämpferrohr 12b des Stoßdämpfers 12 indes ist über einen zentrischen Anschlusszapfen 28 mit dem Dämpferlager 18 verbunden, dessen äußeres Lagergehäuse 18a mit dem nicht dargestellten Aufbau des Kraftfahrzeuges verschraubt ist.

Der über einen gummielastischen, ringförmigen Dämpferkörper 18c mit dem Lagergehäuse 18a verbundene Lagerkern 18b des Dämpferlagers 18 bildet mit einem oberen Federteller 30 und einem topfförmigen Gehäuseteil 32 eine Baueinheit, die konzentrisch an dem Anschlusszapfen 28 angeordnet ist.

Die Speicherfeder 16 stützt sich einerseits an dem oberen Federteller 30 und andererseits an einem Verstellfederteller 34 ab. Ferner stützt sich die in ihrer Vorspannkraft entgegen gerichtete Tragfeder 14 an dem unteren Federteller 26 und ebenfalls an dem Verstellfederteller 34 ab.

Der Verstellfederteller 34 ist einstückig mit einer Gewindemutter 36 ausgeführt, die über Kugeln 38 in Axialrichtung formschlüssig mit einer Gewindespindel 40 des Stelltriebes 22 bzw. eines Kugelgewindetriebes in Eingriff ist.

Die Gewindespindel 40 wiederum ist über Wälzlager 42, 44 auf dem Anschlusszapfen 28 und dem Dämpferrohr 12b drehbar, jedoch axial unverschiebbar gelagert.

Ferner trägt die Gewindespindel 40 den Rotor 46 des Elektromotors 24, dessen Stator 48 unter Belassung eines geringfügigen Ringspaltes den Rotor 46 umschließt.

Um die Speicherfeder 16 ist ein gummielastischer Faltenbalg 50 angeordnet. Der Faltenbalg 50 ist an dem Federteller 30 und an dem Verstellfederteller 34 befestigt und schließt somit einen oberen Raum 54 bzw. die Speicherfeder 16 und den integrierten Elektromotor 24 nach außen ab.

Des Weiteren ist ein die Tragfeder 14 umschließender, rotationssymmetrischer Metallbalg 52 vorgesehen, der neben seiner Schutzfunktion torsionssteif und als Zusatzfeder mit einer Federkonstante C₃ ausgeführt ist. Der Metallbalg 52 ist an dem unteren Federteller 26 und ebenfalls an dem Verstellfederteller 34 befestigt und bildet somit den darunter liegenden, abgeschlossenen Raum 56.

Der Metallbalg 52 bildet somit zunächst eine Verdrehsicherung für den Verstellfederteller 34 und verhindert, dass sich dieser bei Federbewegungen der Tragfeder 14 und der Speicherfeder 16 verdrehen kann. Die entsprechenden Torsionsmomente der Federn 14, 16 können über die Federauflagen (ohne Bezugszeichen) abgebaut werden.

Zudem ist der Metallbalg 52 aus Federstahlblech so ausgeführt, dass er wie nachstehend beschrieben als eine die Tragfeder 14 unterstützende Zusatzfeder wirkt.

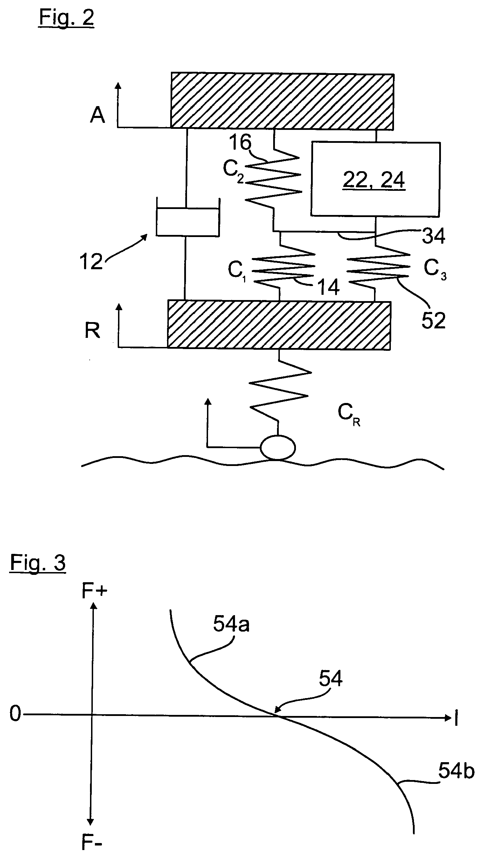

Dies veranschaulicht auch das Ersatzschaltbild des Federbeines 10 gemäß Fig. 2.

Wie ersichtlich ist, sind zwischen den Aufbau A des Kraftfahrzeuges als gefederte Masse und dem Rad R als ungefederte Masse zum einen der Stoßdämpfer 12 und zum anderen die Tragfeder 14 mit der Federkonstante C₁ und die Speicherfeder 16 mit der Federkonstante C₂ angeordnet. Die Tragfeder 14 und die Speicherfeder 16 sind in Reihe geschaltet und stützen sich beide an dem Verstellfederteller 34 ab.

Parallel zur Tragfeder 14 ist der Metallbalg 52 mit der Federkonstante C₃ angeordnet, der sich ebenfalls an dem Verstellfederteller 34 abstützt. Der Verstellfederteller 34 wird mittels des über den Elektromotor 24 angetriebenen Kugelgewindetriebes 22 axial verstellt. Die Federkonstanten C₁ und C₃ bilden wie ersichtlich bei blockiertem Antrieb die Gesamtfederrate des Federbeines 10, während die Speicherfeder 16 mit der Federkonstante C₂ insbesondere zur Reduzierung der von dem Stelltrieb 22 und dem Elektromotor 24 aufzubringenden Stellkräfte dient.

Die Fig. 3 zeigt anhand der dargestellten Kraft-Weg-Kennlinie 54 die Auslegung des Metallbalges 52 als Zusatzfeder, deren Kraft F in der Konstruktionslage des Federbeines 10 bzw. deren zugehöriger Radaufhängung gegen Null geht. In den einer Einfederung F+ (Verringerung der Balglänge I) entsprechenden Ast 54a und den einer Ausfederung F- entsprechenden Ast 54b der Kennlinie 54 verläuft diese zunächst linear und geht dann wie ersichtlich in eine progressive Auslegung über.

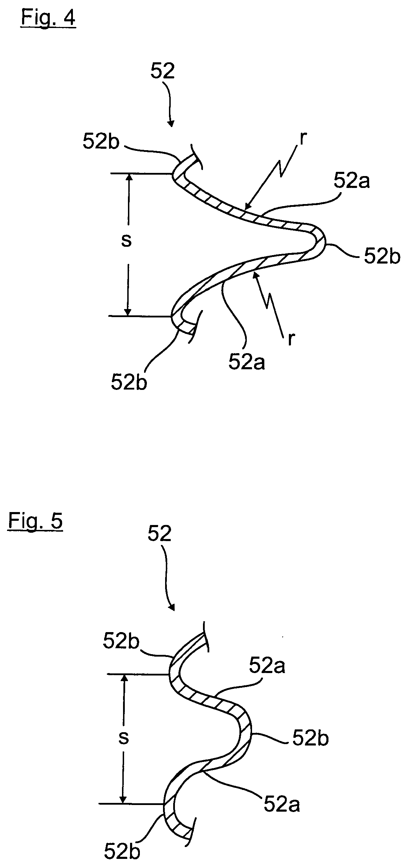

Die Fig. 4 und 5 zeigen abschnittsweise bevorzugte Gestaltungen des Metallbalges 52.

So ist gemäß Fig. 4 der Metallbalg 52 aus Stahlblech und in einer definierten Wandstärke hergestellt. Die harmonikaartig gefalteten Lamellen 52a gehen dabei mit gerundeten Abschnitten 52b ineinander über. Die Abschnitte 52b der Lamellen 52a sind in der besagten Konstruktionslage jeweils in einem Abstand s voneinander entfernt und definieren kumuliert den theoretisch möglichen Einfederweg des Metallbalges 52.

Ferner sind die Lamellen 52a im Querschnitt betrachtet mit einander zugewandten Krümmungsradien r versehen, die über den Einfederweg zunächst eine lineare Kraftzunahme F und durch zunehmendes Anlegen der Lamellen 52a aneinander ein progressives Ansteigen der Federrate bewirken.

Gemäß Fig. 5 sind die Lamellen 52a des Metallbalges 52 wellenförmig mit ineinander übergehenden Rundungen 52b ausgeführt, wobei die Rundungen 52b wiederum in einem Abstand s zueinander angeordnet sind und den möglichen Einfederweg definieren.

Zur Erzielung der gewünschten Kennlinie 54 nach Fig. 3 kann der Metallbalg 52 gemäß Fig. 4 oder 5 auch eine unterschiedliche Auslegung der Abstände s aufweisen, so dass zunehmend Lamellenpakete (einander benachbarte Lamellen 52a der Fig. 4 oder Rundungen 52b der Fig. 5) über den Einfederweg betrachtet auf Block gehen und somit eine progressive Zunahme der Kennlinie 54 des Metallbalges 52 bewirken.

Des Weiteren kann der Metallbalg 52 zur Bestimmung der Kennlinie 54 in nicht dargestellter Weise unterschiedliche Wandstärken, unterschiedliche geometrische Ausbildungen der Lamellen 52a und gegebenenfalls der Abschnitte bzw. Rundungen 52b, unterschiedliche Abstände s aufweisen. Der Metaitbatg 52 kann einstückig oder gegebenenfalls aus mehreren, miteinander verschweißten Abschnitten gebildet sein.

## Patentansprüche

1. Federbein für Radaufhängungen von Kraftfahrzeugen, mit einem Teleskop-Stoßdämpfer (12), der einerseits am Aufbau des Kraftfahrzeuges und andererseits an einem Radführungselement (20) abgestützt ist, mit einer um den Stoßdämpfer (12) angeordneten Tragfeder (14) und einer in Reihe geschalteten Speicherfeder (16), die als Schraubendruckfedern ausgebildet sind und beide an einem Verstellfederteller (34) in gegensinniger Kraftrichtung angreifen, ferner mit einem innerhalb der Tragfeder (14) und der Speicherfeder (16) angeordneten, elektromotorisch betätigten Stelltrieb (22), mittels dem der Verstellfederteller (34) axial verschiebbar ist, sowie mit einem ringförmigen, die Tragfeder (14) umschließenden Faltenbalg (52) und mit einem ringförmigen, die Speicherfeder (16) umschließenden Faltenbalg (50), wobei die Faltenbalge (50, 52) mit dem Verstellfederteller (34) verbunden sind, **dadurch gekennzeichnet, dass** der Faltenbalg (52) als ein die Tragfeder (14) unterstützendes Zusatzfederelement ausgebildet ist, und dass der Faltenbalg (52) als torsionssteifer Metallbalg ausgebildet ist.

2. Federbein nach Anspruch 1, **dadurch gekennzeichnet, dass** der Faltenbalg (52) konstruktiv so ausgelegt und gestaltet ist, dass er im mittleren Belastungsbereich (um die Konstruktionslage) eine lineare Kennlinie (54) und darüber hinaus eine progressive Kennlinie (54) aufweist.

3. Federbein nach Anspruch 2, **dadurch gekennzeichnet, dass** ein Kraftverlauf (F) des Faltenbalges (52) durch ungleiche Wandstärken und/oder durch geometrische Ausbildung der Lamellen (52a) des Faltenbalges (52) und/oder durch ungleiche Abstände (s) zwischen den Lamellen (52a) und/oder durch die Wahl des verwendeten Werkstoffes gezielt bestimmt ist.

4. Federbein nach einem der vorhergehenden Ansprüche, **dadurch gekennzeichnet, dass** der Faltenbalg (52) konstruktiv so ausgelegt ist, dass er in der Konstruktionslage der Radaufhängung kraftfrei ist.

5. Federbein nach einem der vorhergehenden Ansprüche, **dadurch gekennzeichnet, dass** der um die Speicherfeder (16) herum ausgebildete Faltenbalg (50) an deren Federteller (30, 34) befestigt und als herkömmlicher, gummielastischer Faltenbalg ausgebildet ist.

## Claims

1. A strut for wheel suspensions of motor vehicles comprising a telescopic shock absorber (12) supported on a chassis of a motor vehicle on one side and on a wheel guide element (20) on the other side, a suspension spring (14) arranged around the shock absorber (12), and a preloaded spring (16) connected in series, the suspension spring and the preloaded spring being configured as compression coil springs and both acting on an adjustable spring plate (34) in opposite directions of force, the strut further comprising an electrically driven adjustment drive (22) disposed within the suspension spring (14) and the preloaded spring (16), the adjustment drive being configured to axially displace the adjustable spring plate (34), wherein ring-shaped bellows (52) enclose the suspension spring (14) and ring-shaped bellows (50) enclose the preloaded spring (16), wherein the bellows (50, 52) are connected to the adjustable spring plate (34), **characterized in that** the bellows (52) are configured as a supplemental spring element supporting the suspension spring (14) and the bellows (52) are configured as torsion-resistant metal bellows.

2. The strut according to claim 1, **characterized in that** the bellows (52) are constructed so as to have a linear characteristic curve (54) in the middle load range (around a construction level), and beyond that to have a progressive characteristic curve (54).

3. The strut according to claim 2, **characterized in that** a force progression (F) of the bellows (52) is specifically determined based on unequal wall thicknesses and/or geometric configuration of convolutions (52a) of the bellows (52) and/or unequal distances (s) of the convolutions (52a) and/or the choice of the material used.

4. The strut according to any of the preceding claims, **characterized in that** the bellows (52) are constructed so as to be free of force at the construction level of the wheel suspension.

5. The strut according to any of the preceding claims, **characterized in that** the bellows (50) formed around the preloaded spring (16) are connected with the spring plate (30, 34) and configured as conventional rubber-elastic bellows.

## Revendications

1. Jambe de force à ressort pour suspensions de roues de véhicules automobiles, avec un amortisseur télescopique (12), qui est appuyé d'une part à la carrosserie du véhicule automobile et d'autre part à un élément de guidage de roue (20), avec un ressort porteur (14) agencé autour de l'amortisseur (12) et un ressort accumulateur (16) monté en série qui sont conçus comme des ressorts cylindriques de compression et qui sont tous deux en prise avec une coupelle de ressort d'ajustement (34) dans des directions de force opposées, de plus avec un mécanisme de réglage (22), qui est agencé à l'intérieur du ressort porteur (14) et du ressort accumulateur (16) et est actionné par un moteur électrique et avec lequel la coupelle de ressort d'ajustement (34) est déplaçable axialement, ainsi qu'avec un soufflet (52) annulaire entourant le ressort porteur (14) et avec un soufflet (50) annulaire entourant le ressort accumulateur (16), les soufflets (50, 52) étant reliés à la coupelle de ressort d'ajustement (34), **caractérisée en ce que** le soufflet (52) est conçu comme un élément à ressort supplémentaire soutenant le ressort porteur (14) et **en ce que** le soufflet (52) est conçu comme un soufflet métallique rigide en torsion.

2. Jambe de force à ressort selon la revendication 1, **caractérisée en ce que** le soufflet (52) est conçu et construit de telle sorte qu'il comporte dans la zone de charge médiane (autour de la position de construction) une courbe caractéristique linéaire (54) et au-delà une courbe caractéristique progressive (54).

3. Jambe de force à ressort selon la revendication 2, **caractérisé en ce qu'**une allure de force (F) du soufflet (52) est déterminée de manière ciblée par des épaisseurs de paroi différentes et/ou par une conception géométrique des lamelles (52a) du soufflet (52) et/ou par des distances (s) différentes entre les lamelles (52a) et/ou par le choix du matériau utilisé.

4. Jambe de force à ressort selon l'une des revendications précédentes, **caractérisée en ce que** le soufflet (52) est construit de telle sorte qu'il est exempt de force dans la position de construction de la suspension de roue.

5. Jambe de force à ressort selon l'une des revendications précédentes, **caractérisée en ce que** le soufflet (50) conçu autour du ressort accumulateur (16) est fixé à sa coupelle de ressort (30, 34) et est conçu comme un soufflet élastique usuel en caoutchouc.
